(19)

**Europäisches Patentamt**
**European Patent Office**
**Office européen des brevets**

(11) **EP 4 258 617 A1**

(12) **EUROPEAN PATENT APPLICATION**

(43) Date of publication:
**11.10.2023   Bulletin 2023/41**

(21) Application number: **22167407.0**

(22) Date of filing: **08.04.2022**

(51) International Patent Classification (IPC):
**H04L 47/28** (2022.01)        **H04W 28/02** (2009.01)

(52) Cooperative Patent Classification (CPC):
**H04L 47/28;** H04W 28/0236

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Deroo, Frederik**
  **81549 München (DE)**
• **Gottschalk, Corinna**
  **81379 München (DE)**
• **Majewski, Kurt**
  **81541 München (DE)**
• **Obradovic, Dragan**
  **85521 Ottobrunn (DE)**
• **Scheiterer, Ruxandra**
  **82538 Geretsried (DE)**
• **Steindl, Günter**
  **92284 Poppenricht (DE)**

(74) Representative: **Siemens Patent Attorneys**
**Postfach 22 16 34**
**80506 München (DE)**

(54) **COMPUTER-IMPLEMENTED METHOD, COMPUTER-IMPLEMENTED TOOL AND CONTROL SYSTEM FOR TRACKING MULTICYCLIC TRAFFIC OF TIME SENSITIVE NETWORKING (TSN)"-NETWORKS WITH SYNCHRONIZED END-STATIONS**

(57)    In order to establish and update possible locations of stream frames within the "Time Sensitive Networking <TSN>" it is proposed to capture by a computer-implemented method and a computer-implemented tool (CIT) possible locations of multicyclic traffic in the "Time Sensitive Networking <TSN>"-network being necessary for delay estimations and stream acceptance for low-priority streams or other classes of multicyclic streams which have each a reduction rate "RR" and a fixed path, by presenting a software-approach (SWA) as a compact way to represent information "What, e.g. a stream frame, can be where at which time" as well as an algorithmbased or algorithmic framework (FRW$_{alg}$) to compute iteratively and recursively relevant values such as bounds for stream delays and thus guarantee that no traffic is sent according to timing constraints, e.g., no traffic may to be lost due to overflowing queues.

PICTURE 1

[0,0]   [0,0]   [0,1]  [0,1]   [1,2]

EP 4 258 617 A1

**Description**

The invention refers to a computer-implemented method for tracking multicyclic traffic in "Time Sensitive Networking (TSN)"-networks with synchronized end-stations according to the preamble of claim 1, a computer-implemented tool for tracking multicyclic traffic in "Time Sensitive Networking (TSN)"-networks with synchronized end-stations according to the preamble of claim 5 and a control system for tracking multicyclic traffic of Time Sensitive Networking (TSN)"-networks with synchronized end-stations according to the preamble of claim 6.

"Time Sensitive Networking <TSN>" as an upcoming technology is designed for making real-time Ethernet-based networks deterministic regarding data exchange in a precise manner with a defined latency however without any proprietary solutions and refers to a set of IEEE 802 standards related to the Layer 2 of the ISO/OSI Model and adds definitions to guarantee determinism and throughput in Ethernet-networks.

A deterministic Ethernet is needed especially in Industrial Automation to achieve a fast, deterministic, and robust communication. Before "Time Sensitive Networking <TSN>" as the upcoming technology proprietary solutions were available for this purpose, such as "PROFINET IRT", "Sercos III", and "Varan".

Actually, industrial trends like Industry 4.0 and the Industrial Internet of Things lead to an increase in network traffic in ever-growing converged networks, which require flexibility and scalability to support small devices as well as big data server systems while ensuring bounded latency for time-critical communication. These requirements are going to be covered by the "Time Sensitive Networking <TSN>" providing a standardized mechanisms for the concurrent use of deterministic and non-deterministic communication.

In "Time Sensitive Networking <TSN>" communication planning, it is necessary to obtain worst case estimations for delay and interference for different types of streams. These estimations are ultimately needed to decide whether streams can be accepted, which is only done if doing so preserves the guaranteed properties of their class types. So, for example streams of class "Low", which by the way allows multicyclic traffic, can only be accepted if, among others, they satisfy the condition that they will not be lost due to a buffer overflow in switches and that they will not cause this for already planned other streams of the class "Low" either.

The new communication TSN-standard deals with several classes of messages with different importance, which in the following is called "priority", and which must be sent through an industrial communication network operating in a cyclic fashion. For this purpose, it is particularly important when a stream class allows multicyclic traffic, i.e., frames of a stream do not need to arrive in the cycle in which they were transmitted.

In that case, determining whether two frames of different streams meet does not only depend on their path through the network and the phase they are sent in, but also on how many phases it takes a frame to reach its destination and where a frame could be at different points in time.

One example of a stream class where this will be relevant particularly is a class of periodic streams which typically is associated with a lower priority, denoted accordingly by the class "Low". The streams of this class, called a low-priority stream, have a zero congestion loss constraint, i.e., no frame may to be lost, but they are not constrained to arrive in the cycle in which they were transmitted, and they cannot preempt (cf. *[definition for preemption]* further below) the sending of other frames.

In the following some basic information about TSN-communication are presented.

TSN-Communication is organized in the form of streams, where a stream sends a frame of fixed size along a chosen route with a certain periodicity. This periodicity of the stream is measured in scheduling cycles. For practical reasons, this periodicity, which in the following is defined or called as reduction rate "RR" of the stream with a power of two, "RR=2" " with $n \in \mathbb{N}$ (1, 2, 3, ...) .

This means that a stream with "RR=2" sends a frame in every second scheduling cycle. For all but "RR=1" this requires choosing in which scheduling cycles the stream will be sent, which it is called a phase "p" of the stream. So, for example a stream with a reduction ratio R, the phases "p" can be chosen within a range of "0, ...,R-1" and with $p_0 := p=0, ..., P_{R-1} := p=R-1$.

Usually, there are multiple priority classes of streams with different properties in a "Time Sensitive Networking (TSN)"-network. Thereby it is considered a setup where each node in the network maintains queues for every stream priority class and each queue internally operates in a "first-in-first-out <FIFO>"-manner, but if there is more than one non-empty queue, the queue associated with the highest priority is processed. If there is not enough storage space left in a queue to store an incoming frame, this frame is dropped, and the corresponding message is lost. As a consequence of this FIFO/priority-concept, nodes in the "Time Sensitive Networking (TSN)"-network which do not send or receive messages do not need access to a synchronized time or complex traffic shapers.

Typically, in addition to the low-priority stream described above, there are also high-priority streams whose frames are also sent periodically, but which besides the zero-loss constraint also have a maximal latency constraint, i.e., they must arrive at their destination either within their sending cycle or in an even shorter time window. These streams may also preempt (cf. *[definition for preemption]* further below) other streams, in particular the low-priority streams described above.

Moreover, there is also a traffic of streams of lower-priority, which may be stochastic in nature, e.g., "non-real-time <NRT>"-traffic, where an arrival must not be guaranteed, i.e., frames may be lost. Class-based stream constraints are always guaranteed through an acceptance process, which is usually incremental, i.e., the TSN-communication network can refuse to send streams to maintain all necessary guarantees.

Since the "Time Sensitive Networking <TSN>" is a new standard, there is little established practice in operation yet. However, in surveying the literature to determine how low-priority streams are generally dealt with, most strategies involve traffic shapers at the individual nodes (cf. for example the non-patent literature: Craciunas, Oliver et al.: "An Overview of Scheduling Mechanisms for Time-sensitive Networks" in http://www.cs.uni-salzburg.at/~scraciunas/pdf/techreports/craciunas ETR17.pdf).

According to this literature it is required time information and synchronization for all nodes, whereas the present invention refers to a "Time Sensitive Networking (TSN)"-network where only nodes that send or receive messages are synchronized, these are the End Stations of the TSN-network.

Alternatively, it is possible to require the fulfilment of stringent constraints to provide the required guarantees.

For example, if it is required that all low priority frames arrive at their destination within the cycle they are sent, similar strategies as for high priority streams can be applied.

However, that severely limits the capacity of the network, i.e., by sending only a fraction of the theoretically possible amount of traffic data, and it can even make some longer routes in the network infeasible in all scenarios. Thus, since low capacity frames cannot preempt (cf. *[definition for preemption]* further below) the sending of other frames, a worst case analysis needs to at least account for "non-real-time <NRT>"-traffic. This should therefore be considered as a short-term workaround rather than a permanent solution.

Furthermore, there are several pre-published patent applications WO2019/083508 A1, WO2019/083509 A1, WO2019/083510 A1 dealing with optimization problems arising from considering high priority streams regarding the "Time Sensitive Networking <TSN>", i.e., Phase allocation and send order, by using a cycle-based interference model.

It is an objective of the invention to propose a computer-implemented method, a computer-implemented tool and a control system for tracking multicyclic traffic of Time Sensitive Networking (TSN)"-networks with synchronized end-stations, by which possible locations of stream frames within the "Time Sensitive Networking <TSN>" are established and updated.

By solving this objective, the corresponding solution supplies a missing piece for a different stream class whose requirements make some problems much more complex. This is a first step towards addressing similar problems in a low priority and mixed stream scenario within the "Time Sensitive Networking <TSN>"-network.

This objective is solved regarding to a computer-implemented method defined in the preamble of claim 1 by the features in the characterizing part of claim 1.

The objective is further solved regarding to a computer-implemented tool defined in the preamble of claim 5 by the features in the characterizing part of claim 5.

Moreover, the objective is solved regarding to a control system defined in the preamble of claim 6 by the features in the characterizing part of claim 6.

The main idea of the invention according to the claims 1, 5 or 6 is to capture possible locations of multicyclic traffic in the "Time Sensitive Networking <TSN>"-network being necessary for delay estimations and stream acceptance for low-priority streams or other classes of multicyclic streams which have each a reduction rate "RR" and a fixed path by presenting a software-approach as a compact way to represent information "What, e.g. a stream frame, can be where at which time" as well as an algorithm-based or algorithmic framework (cf. claim 3) to compute iteratively and recursively relevant values such as bounds for stream delays and thus guarantee that no traffic is sent according to timing constraints, e.g., no traffic may to be lost due to overflowing queues.

For doing so the approach or framework does not rely on time-synchronized intermediate nodes or other traffic shapers for tracking multicyclic traffic of the "Time Sensitive Networking (TSN)"-network. Consequently, the shaper-less approach or framework is more flexible with respect to hardware and software requirements.

Since it is possible to parameterize an algorithm of the framework, it is possible to find the right balance between required running time and solution quality for different use cases. A cycle-based phase interval model is compatible with different delay computation models and thus usable in different contexts.

Furthermore, since the bounds computation is being an iterative process, the approach or framework can be used in a setting where only one stream is added as well in a situation where multiple streams are added to the Time Sensitive Networking (TSN)"-network.

Single aspects of the idea solving the addressed problem (objective of the invention) and being summarized above are given by the following:

1. The approach or framework is based on establishing and updating the possible locations of frames of multicyclic streams participating in the considered communication process within the "Time Sensitive Networking (TSN)"-network. This is a necessary step in the acceptance process for multicyclic streams unless the constraints can be guaranteed by alternative means (cf. point 3.).

Regarding this approach or framework, it should be noted why it is difficult for multicyclic traffic to decide where a frame could be at a given time. For streams whose frames have a latency constraint of a fraction of one cycle, the only streams which can influence each other are those in the same phase "p". Therefore, it suffices to do an analysis of queue filling levels and delays on a cyclic basis. The analyzed delays are needed to estimate how long it takes to reach a node of the "Time Sensitive Networking (TSN)"-network in the worst case. For multicyclic streams respectively frames on the other hand, any change or additional stream can result in a chain reaction if one frame delays another which is then present in a new phase "p". And in turn it can delay new streams and so on.

2. According to PICTURE 1 for the frame of a low-priority stream, each node on the corresponding path within the "Time Sensitive Networking (TSN)"-network has an interval of cycles during which a frame can be present at an output port, starting with the phase where it is sent e.g., for a frame which is sent in phase "$p_0 := p=0$", the phase intervals on the path could look like this:

3. The algorithm-based framework is an iterative and recursive process based on these assumptions:

- For a "Time Sensitive Networking (TSN)"-network without stream interference, it is known minimum and maximum processing times in bridges or edges and nodes *(cf. used terms in graph theory; so, the data structure of a graph is non-hierarchical, wherein points are called nodes, links are called edges and a bridge of a connected graph is a graph edge whose removal disconnects the graph).*

- It is necessary a given delay computation model which computes upper bounds caused by interference with other streams. This delay can contain a constant share, which could be node-wise and/or global, as well as a portion depending on which streams can be present at the same node. This could be for high priority frames with or without "preemption" [*In computing: Preemption is the act of temporarily interrupting an executing task, with the intention of resuming it at a later time; Ethernet; "Time Sensitive Networking (TSN)": This new technique solves the problem of a too long network message which doesn't fit in a cycle. Simply explained, it does the following: Stop (preempt) the transmission of too long messages before the end of the guard band.]* other low-priority frames (cf. point 1. for which the phase intervals have already been computed as depicted in PICTURE 1) and further frames with even lower priority.

- An underlying undirected graph induced by all stream paths is acyclic, i.e., either the "Time Sensitive Networking (TSN)"-network itself is acyclic, wherein edges going in both directions are allowed or at least the union of all undirected fixed paths for streams is an acyclic graph.

If such delay computation models are used, lower bounds for the phase intervals can be computed in a straightforward manner. The challenge here is the determination of upper limits. Since delays and phase intervals influence each other, which means that a change in phase intervals can change worst case delays and vice versa, it is proposed an iterative recursive algorithm to address this problem, which can be used with different delay computation models.

In PICTURE 2 it is exemplified how the lower limits at different switches are calculated, as well as the upper limits given the interference delay.

So, a frame "F" travels between SendNode and Switch2 over one network node, a Switch1. If there is no other traffic in the given phase, the earliest arrival times are determined by cable delays and the minimal values of bridge delays. Without loss of generality no other delay at sending or other forwarding delays are shown.

```
ArrivalTime_Earliest(@Switch1) = FrameStartTime+CD1
```

```
ArrivalTime_Earliest(@Switch2) =
FrameStartTime+CD1+BDmin{+}CD2
```

In case other traffic is simultaneously present in Switch1 and shares the same output port with frame "F", additional interference delay can result from the other frames. Letting the worst-case interference delay, which can be calculated, be "InterfD", the latest arrival time of the frame "F" is:

$$\text{ArrivalTime\_Latest(@Switch2)} =$$
$$\text{FrameStartTime+CD1+(BDmax+InterfD)\{+\}CD2}$$

The time when the last bit of "F" reaches Switch2 is equal to the time when the first bit reaches it plus a frame duration "FD". Thereby it is assumed that the speed of the "Time Sensitive Networking (TSN)"-network is the same overall. From the arrival times computation of the cycle intervals is straightforward.

4. Compact representation of phase intervals:

If it is considered the "Time Sensitive Networking (TSN)"-network over time, for each stream and each node, the result for a stream at a node would be a set of phase intervals, which grows with time, since each frame, which is sent, occupies a range of cycles during which it can be present at some node, with phase intervals for each stream occurring in a periodic fashion.

So, the first question needed to be answer is how to represent these phase intervals in a compact manner.

If it is used a rejection policy in such a way that no two frames of two streams can be in the same queue, i.e., at the same node of the "Time Sensitive Networking (TSN)"-network, all TSN-traffic repeats after (i) max{RR(S), where "S" is a set of streams "S" with S:= S1, S2, ..., Sn with nGN accepted for the TSN-traffic} =: RRMax and (ii) max{RR(s), where s is at least one new stream "s" requesting a TSN-traffic acceptance} =: RRMax. While it is possible to adapt the measure to a situation where there are considered time blocks of RRMax cycles and record a set of phase intervals for each stream and node, it is presented an algorithm using a more simplified and slightly more pessimistic measure.

For each accepted stream "Sx" with x=(1, 2, ..., n) of the set of streams "S", there are only consider phase interval-lengths of the reduction rate size at most RR(Sx). That means, it is taken take a worst-case perspective over what can happen during any RR(Sx) consecutive cycles. This can be done by adapting the phase interval bounds modulo RR(Sx).

For each new stream "s", there are only consider phase interval-lengths of the reduction rate size at most RR(s). That means, it is taken take a worst-case perspective over what can happen during any RR(s) consecutive cycles. This can be done by adapting the phase interval bounds modulo RR(s).

The following example illustrates the difference between the two measures: Let "Sx" be a stream with a reduction rate "RR(Sx)=4" (and thus 4, 8, ...) at a node "v", which can arrive in phase "$p_0$:= p=0". Assume that it is added a new stream "s" with a reduction rate "RR(s)=8" (and thus 8, 16, ...) at the node "v", which possibly pushes a frame of the stream "Sx" into the next cycle. Now, if the stream "s" also has a phase "$p_0$:= p=0" at node "v", then it would be enough to consider phase intervals [0, 1], [4, 4], [8, 9], [12, 12], ... for the stream "s" at the node "v".

But in contrast there are projected all phase interval bounds to [0, RR(s)-1] and take the worst case which can happen in any of the set of the RR(s) cycles which define a period for the stream "s" to determine a node interval for the node "v", i.e., for the stream "s" it are the phase intervals in the worst cycles among the phase interval sets [0, 3], [4, 7], [8, 11], ..., one is being interested in.

More general for the stream "s" it are the phase intervals in the worst cycles among the phase interval sets [0 + i*RR(s), RR(s)-1 + i*RR(s)] with iGN one is being interested in. The same goes for the accepted stream "Sx".

Consequently, in this case, it is assumed that the stream "s" has the phase interval [0, 1] at the node "v" and thus the phase intervals [4, 5], [8, 9], [12, 13].

On the positive side, that means that it is needed to consider at most two phase intervals for each node and stream.

For a frame, there is one phase interval at the node of the "Time Sensitive Networking (TSN)"-network, which may be split in two due to a modulo calculation, i.e., for the stream "s" there might be intervals [0, y] and [z, RR(s)-1] with y, z=(1, 2, 3, ...), but it is not necessary to consider several frames.

To ensure that no two frames of the same stream meet at a the node of the "Time Sensitive Networking (TSN)"-network in the same cycle, it is required for a phase interval [a, b] for a stream "s", before modulo computation is done, that a rejection condition "b-a < RR(s)" is checked. If at some point this is not satisfied, the currently considered stream is rejected, but it would be possible to increase the reduction rate "RR" and try again. The same rejection condition is valid for the accepted stream "Sx".

5. Recursive algorithmic framework: The above phase interval calculation can be included in a recursive algorithmic framework used for checking if a new low-priority stream can be accepted:

The general idea is to iteratively compute the phase intervals and worst-case delays, which are used for the phase interval computation, by going through all cycles relevant for a frame of a stream "S, s". For each such cycle it is checked at all relevant nodes of the "Time Sensitive Networking (TSN)"-network where a frame could be in the current cycle. This has been determined by computations for previous cycles. For these nodes, it is updated the delays, considering previous cycles and other streams as well. If this causes the increase of another stream's node phase interval, the same algorithm for that stream is called recursively.

As mentioned previously, phase interval computation depends on having some kind of underlying delay computation model. To compute phase intervals, it is sufficient to have a simple delay model which only uses cycle-based information for the computation.

According to claim 3 a "pure recursive algorithmic framework" in pseudocode is presented.

Thereby the recursive phase interval and/or delay computation and acceptance algorithm is described as follows: which in pseudocode are:

Given:

- The set of streams "S" with node intervals and computed delays.
- The new stream "s".
- The phase "$p_0$" where stream "s" is sent.

Output: The new stream "s" will be rejected in phase "$p_0$" if its acceptance doesn't allow the guarantee of all necessary constraints for a stream union set "S"U"s" because the rejection condition is violated. Otherwise, new intervals for the stream union set "S"U"s".

Main algorithm:

```
INIT("s", "S")
RECOMPUTE("s", "p0", "S")
```

Function Definitions:

```
INIT(s, S)
Compute earliest and latest arrival time of the new stream
"s" at each node "v" along the path of the new stream "s"
with the original node intervals for the set of streams "S"

RECOMPUTE("s", "p", "S")     //outer recomputation framework//
F("s", "p", "S")
While latest arrival time of the new stream "s" is not in
cycle with the phase "p".
        F("s", "p", "S")
```

```
Update table to the reduction rate RR("s") of the stream "s"


F("s", "p", "S")
successful = false
While !successful
       recomputed = false
       For each node "v" along the path of the new stream "s"
       where the new stream "s" could be in the phase "p" from
       start to finish!
(A)          If there is already an account for the new stream
             "s" at the node "v" in the phase "p" CONTINUE to
             next node "v"
(B)          If the rejection condition is violated for the new
             stream "s" at the node "v"→REJECT
             if an adding of the new stream "s" leads to a
             buffer overflow at the node "v" in the phase "p"
             →REJECT
             For each stream "s'" in the set of streams "S"
             whose delay is influenced by adding the new stream
             "s" at the node "v" in the phase "p"
                   Update intervals of the stream "s'" from the
                   new delay for the new stream "s".
                   If that changes any node interval
(C)                      Recompute("s'", "p" mod RR("s'"),
                         "S"\"s'")            //i.e., update
                         delay//
             If any stream "s'" in the set of streams "S"
             increased any interval
                   recomputed = true
             If recomputed
(D)                adapt delay of the new stream "s" to changes
                   at the node "v" in phases "p'" smaller than
                   the phase "p" i.e., "p'"<"p"
       If last node along the path of the new stream "s"
       reached → successful = true → STOP.
```

6. According to claim 4 it is advantageous that the recursive interval and/or delay computation and acceptance algorithm includes a limited recursion depth, which is defined by a number of times the function F("s", "p", "S") is called from itself before having finished for performance reasons and accordingly reject the new stream "s" for which a deeper recursion would be required.

It should be noted that rejection within this framework only rejects those streams which would violate constraints of the "Time Sensitive Networking (TSN)"-network that are necessary for the correctness of the algorithm. In the complete frame acceptance process, further streams could be rejected due to other constraint violations.

7. Illustrations and comments:

PICTURE 3 depicts an illustration of phase intervals for the accepted stream "Sx" with the reduction rate "RR(Sx)=4", columns correspond to nodes "v" on the path of the stream "Sx" and rows correspond to cycles.

It is illustrated a visual representation of the results for one stream to make the steps of the algorithm clearer. The results are represented in a table where each row represents one cycle and thus one iteration of the outer while loop of the "pure recursive algorithmic framework" in pseudocode described under point 5., although adjustments in other rows (below) might be necessary. The columns correspond to the vertices the path of the stream "Sx", ordered in the order they are visited in the "Time Sensitive Networking (TSN)"-network. In each row, it is iterated through the node columns from left to right (representing START to END of a path through the "Time Sensitive Networking (TSN)"-network). Updates in (D) of the "pure recursive algorithmic framework" in pseudocode described under point 5. correspond to updating the column below the current row, calling "Recompute (...)" for another stream corresponds to updating a different table.

Consider the case of an accepted stream Sx with the reduction rate "RR(Sx)=4", whose path visits 9 nodes with the phase "$p_0:=p=0$". The black x markings represent the possible positions of one frame of the stream Sx (sent in the phase "$p_0:= p=0$"). The orange markings show the next frame of the stream Sx which would be sent in a phase "$p_4:= p=4$".

The blue markings in the PICTURE 3 show how phase intervals are projected to RR(s).

In cycle 4, which is equivalent to cycle 0 for the stream "Sx". It is projected to cycle 0 again (->blue markings) for interference computation. These do not overlap with black x-es already on cycle 0, because of the rejection condition (no two frames of one stream meet at a node).

The orange box in the PICTURE 3 can thus be used to determine phase intervals and/or to decide where interference with other streams can happen.

Creating the orange box from the cycle table is what happens in the part (D) of the "pure recursive algorithmic framework" in pseudocode described under point 5. concerning the "Recompute(...)", possibly creating two intervals instead of one for each node.

As mentioned before, it is used a version where it is considered RR(Sx) phases to record intervals for the stream "Sx" - and thus consider the worst-case interference for any RR(Sx) phases.

This way, if there is one new stream "s" with the reduction rate "RR(s)=8", which influences the accepted stream "Sx" in the phase "$p_0:= p=0$" and another which influences the accepted stream "Sx" in the phase "$p_4:= p=4$", only the worse of the two scenarios will be considered.

As mentioned before, an alternative way of considering interference is considering possible interference in all phases between "RRMax-1" and "0", thereby assuming that RRMax for the "Time Sensitive Networking (TSN)"-network is known beforehand. Then, it is needed only to project what happens after "RRMax" down to smaller phases. If one use the variant to track intervals in "RRMax"-phases, one will need a larger version of this table with "RRMax". In that case, one would need a more careful consideration how the delays are updated. It would not be enough to consider the path of the accepted stream "Sx" just once. Instead, one would need to consider all possible states of frames of the accepted stream "Sx" until the phase "RRMax", i.e., it is needed to consider frames starting in RRMax/RR(Sx) different frames for the accepted stream "Sx", and update for all of them. The algorithm could be adapted to this setting, but technical details would change.

According to a further example, presented and shown in PICTURE 4, it is explained how the recursive computation and adaptions work.

Let's have the following scenario: There is a set of accepted streams "S" with S = S1, S2 and the reduction rate "RR(S2)=2" of the accepted stream "S2" and it is intended to add the new stream "s" with the reduction rate "RR(s)=4" which should be sent in the phase "$p_0:= p=0$". Thus, the function Recompute(s, 0, S) of the "pure recursive algorithmic framework" in pseudocode described under point 5. is called. Now, according to the PICTURE 4 the table in F("s", "0", "S") could look like that in the second iteration of the outer while loop of the "pure recursive algorithmic framework" in pseudocode described under point 5., when actually the situation at a node "v2" considered. Note: The final table will have according to the reduction rate "RR(s)=4" 4 rows.

Assuming in a phase "$p_1:= p=1$" at the node "v2" according to the red marking it is add the new stream "s" which increases the delay of the accepted stream "S2", so that its interval increases somewhere on the path of the accepted stream "S2" at or after the node "v2". Since the "Time Sensitive Networking (TSN)"-network is acyclic, this cannot be at the node "v0" or the node "v1". Therefore, the function Recompute(S2, S\S2 = S1, 1 mod RR(S2)) of the "pure recursive algorithmic framework" in pseudocode described under point 5. is called. Only after that is completely finished including a call to Recompute(s1, -, p') and if necessary, it is continued with the computation for the new stream "s". Firstly, by updating the new stream "s" for the node "v2" at previous phases. Since the phase interval for the accepted stream "S2" was increased, it now is [0, 1] instead of [1, 1], so it could affect the new stream "s" in the phase "$p_0$:= p=0".

This can also influence which nodes have to be considered in the next cycles (phase "p > 1" in the table of the PICTURE 4), but it does not change the considered nodes for the new stream "s" in the previous cycles (phase "p <= 1" in the table of the PICTURE 4).

It has to point out one more thing for a phase "$p_2$:= p=2". Assume that the node "v2" was the node where the phase interval of the accepted stream "S2" was changed. That means, the accepted stream "S2" will be present for the phase "$p_2$:= p=2" as well. However, it has to keep in mind that this has been already accounted for the delay caused by the new stream "s" to the accepted stream "S2" at the node "v2" in the phase "$p_0$:= p=0" during the update. It is therefore important to keep track which effects were already considered during implementation. This is done in the parts (A), (B) of the "pure recursive algorithmic framework" in pseudocode described under point 5. In the opposite scenario where the phase interval of the accepted stream "S2" increases to [0, 1], but the new stream "s" is not present in the phase "$p_0$:= p=0", the update would have to be done now.

## 8. Implementation considerations

The algorithm can be adapted for a practical setting to limit computation time by limiting the recursion depth (cf. claim 4). This means that it is logged how deep the recursion tree is by adding a "recursion_depth"-argument to the function F(...) of the "pure recursive algorithmic framework" in pseudocode described under point 5., which is increased by one with every call of the function F(...) and automatically reject if the recursion tree becomes too deep, i.e., a "recursion_depth"-parameter is too high.

In the previous example, where the function Recompute (S2, ...) from the function Recompute (s, ...) was called, a recursion depth of 2 would mean that it is rejected, if it is necessary, to call the function Recompute (S1, ...) within that second call. However, calling the function Recompute (S1, ...) directly from the function Recompute (s, ...) would be fine.

As a special case, it is considered the scenario where the recursion depth is limited to 1. In that case, no recursive calls are allowed at all. That means, the part (**D**) of the "pure recursive algorithmic framework" in pseudocode described under point **5.** will never be executed, and the recursion is stopped if any interfering stream would increase its phase interval at some node. It should be noticed that the currently processed stream may still take several cycles to reach its destination, therefore this is not the same as requiring that all low-priority streams arrive within one cycle.

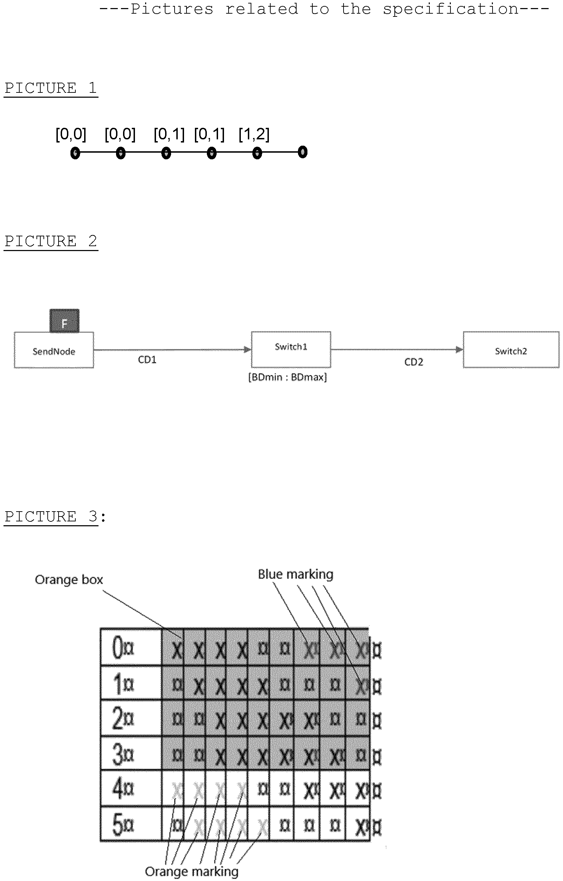

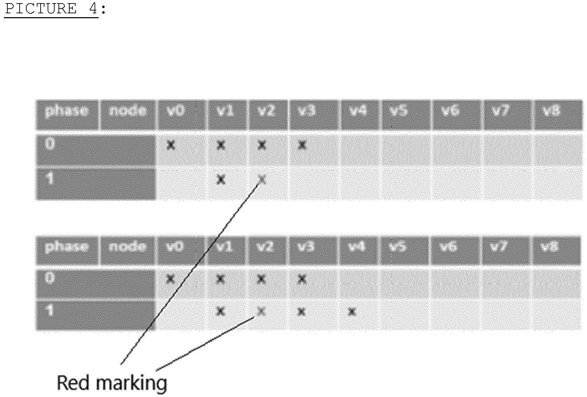

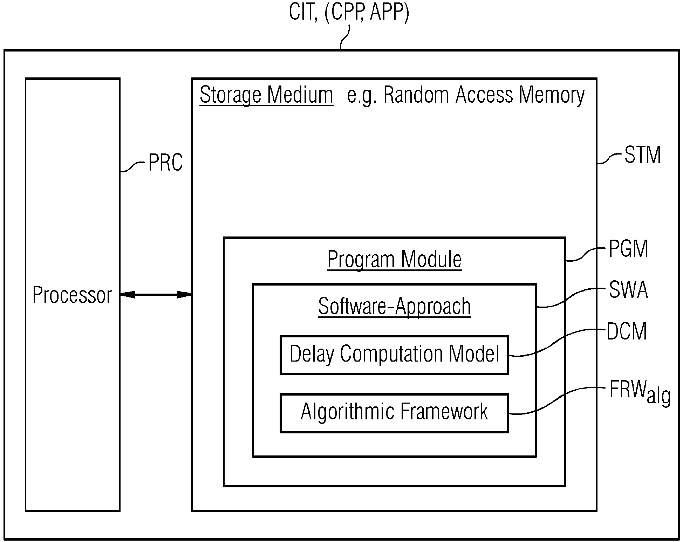

Moreover, additional advantageous developments of the invention arise out of the following description of a preferred embodiment of the invention according to a single FIGURE.

The FIGURE shows a principal diagram of a computer-implemented-tool CIT for tracking multicyclic traffic of a Time Sensitive Networking (TSN)"-network with synchronized end-stations, which is preferably a Computer-Program-Product CPP. The computer-implemented-tool CIT respectively the Computer-Program-Product CPP is designed for example as an APP, which is uploadable into a well-known computer. Such a computer could be included in a control system for tracking the multicyclic traffic of the Time Sensitive Networking (TSN)"-network.

According to the depiction in the FIGURE the computer-implemented-tool CIT respectively the Computer-Program-Product CPP includes a non-transitory, processor-readable storage medium STM, e.g. a Random Access Memory <RAM>, having processor-readable program-instructions of a program module PGM implementing a software-approach SWA for tracking multicyclic traffic of a Time Sensitive Networking (TSN)"-network with the synchronized end-stations stored in the non-transitory, processor-readable storage medium STM and a processor PRC connected with the storage medium STM executing the processor-readable program-instructions of the program module PGM to track the multicyclic traffic in the Time Sensitive Networking (TSN)"-network.

In order to track this multicyclic traffic the software-approach SWA includes a delay computation model DCM and a recursive algorithmic framework $FRW_{alg}$ and is designed such that

1) the TSN-traffic is organized in the form of streams concerning multiple priority classes, in particular high priority classes and/or low priority classes relating to zero-loss and/or latency constraints, and including a set of streams "S" with S:= S1, S2, ..., Sn with nGN accepted for the TSN-traffic and at least one new stream "s" requesting a TSN-traffic acceptance, where each stream "S1, S2, ..., Sn", "s" with a reduction ratio "R" sends a frame of fixed size along a chosen route via TSN-nodes "v" including the end-stations and TSN-bridges between and with a certain periodicity as a reduction rate "RR" measured in scheduling cycles and with a phase "p" within a range of "0, ...,R-1" with $p_0$:= p=0, ...,$p_{R-1}$:= p=R-1

**2)** each node maintains queues for every stream priority class and each queue internally operates buffer based in a FIFO manner,

**3)** the delay computation model DCM, which is based on an underlying undirected graph induced by all paths of the streams of the TSN-traffic being acyclic, is used to

- consider without stream interferences of the TSN-traffic delays due to minimum and maximum processing times along the route via the TSN-nodes and the TSN-bridges and
- compute upper bounds delays caused by stream interferences of the TSN-traffic,

**4**) the TSN-traffic is considered over time for each stream "S1, S2, ..., Sn", "s" and each node "v" resulting in a set of phase intervals "[a, b]" with a,bEN for the each stream "S1, S2, ..., Sn", "s" and the each node "v",
**5**) the recursive algorithmic framework $FRW_{alg}$ is executed by the following steps to

**5.1**) use a rejection policy for a compact representation of the phase intervals such that since all the TSN-traffic repeats after a maximum reduction rate "$RR_{Max}$" as a maximum reduction rate "RR(S1, S2, ..., Sn; s)" of the streams "S", "s" it is considered for each stream "S1, S2, ..., Sn", "s" while projecting all phase interval bounds "0, ... RR(S1, S2, ..., Sn; s)-1" to
**5.1.1**) take a worst-case scenario happened in any reduction rate "RR(S1, S2, ..., Sn; s)" consecutive cycles,
**5.1.2**) be interested in the phase intervals in worst cycles among phase interval sets "[0 + i*RR(S1, S2, ..., Sn; s), RR(S1, S2, ..., Sn; s)-1 + i*RR(S1, S2, ..., Sn; s)]" with iGN, **5.2**) do a modulo-calculation "the phase interval bounds "0, ... RR(S1, S2, ..., Sn; s)-1"mod"RR (S1, S2, ..., Sn; s)"",
**5.3**) ensure that no two frames of the same stream "S1, S2, ..., Sn", "s" are in the same queue at the same cycle it is checked for the phase interval "[a, b]" and each stream "S1, S2, ..., Sn", *"s"* a rejection condition "b-a < RR(S1, S2, ..., Sn; s)" of the rejection policy,
**5.4**) iteratively compute the phase intervals "[a, b]", in particular adapt the phase intervals "[a, b]" of the set of streams "S" and compute the phase interval of at least one new stream "s", and worst-case delays by going through all cycles relevant for each stream "S1, S2, ..., Sn", "s" of the TSN-traffic over the nodes "v" to determine by previous computations for previous cycles the location of the frame at the nodes "v" and update the computed delay for these nodes "v" by considering previous cycles and each the other streams of the streams "S", "s",
**5.5**) recursively do the iterative computation and update of the step **5.4**) for that each stream "S1, S2, ..., Sn", "s" if the iterative computation and update of the step **5.4**) causes a node interval increase of each the other streams and preferably in addition to the steps **5.1**) to **5.5**)
**5.6**) check the rejection condition "b-a < RR(S1, S2, ..., Sn; s)" of the rejection policy before the modulo-calculation is done.

The recursive algorithmic framework $FRW_{alg}$ is preferably a recursive interval and/or delay computation and acceptance algorithm, which realized in a pseudocode by the following:
<u>Given:</u>

- The set of streams "S" with node intervals and computed delays.
- The new stream "s".
- The phase "$p_0$" where stream "s" is sent.

<u>Output:</u> The new stream "s" will be rejected in phase "$p_0$" if its acceptance doesn't allow the guarantee of all necessary constraints for a stream union set "S"U"s" because the rejection condition is violated. Otherwise, new intervals for the stream union set "S"U"s".

Main algorithm:

```
INIT("s", "S")
RECOMPUTE("s", "p0", "S")
```

Function Definitions:

```
INIT(s, S)
Compute earliest and latest arrival time of the new stream
"s" at each node "v" along the path of the new stream "s"
with the original node intervals for the set of streams "S"


RECOMPUTE("s", "p", "S")     //outer recomputation framework//
F("s", "p", "S")
While latest arrival time of the new stream "s" is not in
cycle with the phase "p".
        F("s", "p", "S")
Update table to the reduction rate RR("s") of the stream "s"


F("s", "p", "S")
successful = false
While !successful
        recomputed = false
        For each node "v" along the path of the new stream "s"
        where the new stream "s" could be in the phase "p" from
        start to finish!
(A)             If there is already an account for the new stream
                "s" at the node "v" in the phase "p" CONTINUE to
                next node "v"
(B)             If the rejection condition is violated for the new
                stream "s" at the node "v"→REJECT
                if an adding of the new stream "s" leads to a
                buffer overflow at the node "v" in the phase "p"
                →REJECT
                For each stream "s'" in the set of streams "S"
                whose delay is influenced by adding the new stream
                "s" at the node "v" in the phase "p"
                    Update intervals of the stream "s'" from the
                    new delay for the new stream "s".
                    If that changes any node interval
(C)                     Recompute("s'", "p" mod RR("s'"),
                        "S"\"s'")          //i.e., update
                        delay//
```

```
        If any stream "s'" in the set of streams "S"
        increased any interval
                recomputed = true
        If recomputed
(D)             adapt delay of the new stream "s" to changes
                at the node "v" in phases "p'" smaller than
                the phase "p" i.e., "p'"<"p"
        If last node along the path of the new stream "s"
        reached → successful = true → STOP.
```

Furthermore, the recursive interval and/or delay computation and acceptance algorithm includes a limited recursion depth, which is defined by a number of times the function F("s", "p", "S") is called from itself before having finished for performance reasons and accordingly reject the new stream "s" for which a deeper recursion would be required.

**Claims**

1.  Computer-implemented method (SWA) for tracking multicyclic traffic in "Time Sensitive Networking <TSN>" with synchronized end-stations, by which

    **a**) the TSN-traffic is organized in the form of streams concerning multiple priority classes, in particular high priority classes and/or low priority classes relating to zero-loss and/or latency constraints, and including a set of streams "S" with S:= S1, S2, ..., Sn with $n \in \mathbb{N}$ accepted for the TSN-traffic and at least one new stream "$s$" requesting a TSN-traffic acceptance, where each stream "S1, S2, ..., Sn", "$s$" with a reduction ratio "R" sends a frame of fixed size along a chosen route via TSN-nodes "v" including the end-stations and TSN-bridges between and with a certain periodicity as a reduction rate "RR" measured in scheduling cycles and with a phase "p" within a range of "0, ...,R-1" with $p_0$:= p=0, ...,$p_{R-1}$:= p=R-1
    **b**) each node maintains queues for every stream priority class and each queue internally operates buffer based in a FIFO manner,
    **c**) a delay computation model (DCM), which is based on an underlying undirected graph induced by all paths of the streams of the TSN-traffic being acyclic, is used to

    **c1**) consider without stream interferences of the TSN-traffic delays due to minimum and maximum processing times along the route via the TSN-nodes and the TSN-bridges and
    **c2**) compute upper bounds delays caused by stream interferences of the TSN-traffic,

    **d**) the TSN-traffic is considered over time for each stream "S1, S2, ..., Sn", "$s$" and each node "v" resulting in a set of phase intervals "[a, b]" with $a,b \in \mathbb{N}$ for the each stream "S1, S2, ..., Sn", "$s$" and the each node "v", **characterized by**:
    a recursive algorithmic framework ($FRW_{alg}$)
    **e**) using a rejection policy for a compact representation of the phase intervals such that

    **e1**) since all the TSN-traffic repeats after a maximum reduction rate "$RR_{Max}$" as a maximum reduction rate "RR(S1, S2, ..., Sn; $s$)" of the streams "S", "$s$" it is considered for each stream "S1, S2, ..., Sn", "$s$" while projecting all phase interval bounds "0, ... RR(S1, S2, ..., Sn; $s$)-1" to

    **e11**) take a worst-case scenario happened in any reduction rate "RR(S1, S2, ..., Sn; $s$)" consecutive cycles,

**e12**) be interested in the phase intervals in worst cycles among phase interval sets "[0 + i*RR(S1, S2, ..., Sn; *s*), RR(S1, S2, ..., Sn; *s*)-1 + i*RR(S1, S2, ..., Sn; *s*)]" with i∈$\mathbb{N}$,

**e13**) do a modulo-calculation "the phase interval bounds "0, ... RR(S1, S2, ..., Sn; *s*)-1"mod"RR (S1, S2, ..., Sn; *s*)"",

**e2**) to ensure that no two frames of the same stream "S1, S2, ..., Sn", "*s*" are in the same queue at the same cycle it is checked for the phase interval "[a, b]" and each stream "S1, S2, ..., Sn", "*s*" a rejection condition "b-a < RR(S1, S2, ..., Sn; *s*)" of the rejection policy,

f) iteratively compute the phase intervals "[a, b]", in particular adapt the phase intervals " [a, b]" of the set of streams "S" and compute the phase interval of at least one new stream "*s*", and worst-case delays by going through all cycles relevant for each stream "S1, S2, ..., Sn", "*s*" of the TSN-traffic over the nodes "v" to determine by previous computations for previous cycles the location of the frame at the nodes "v" and update the computed delay for these nodes "v" by considering previous cycles and each the other streams of the streams "S", "*s*" and
g) recursively do the iterative computation and update of f) for that each stream "S1, S2, ..., Sn", "*s*" if the iterative computation and update of f) causes a node interval increase of each the other streams.

**2.** Computer-implemented method (SWA) according to claim 1, **characterized in that**
the check of the rejection condition "b-a < RR(S1, S2, ..., Sn; *s*)" of the rejection policy is done before the modulo-calculation.

**3.** Computer-implemented method (SWA) according to claim 1 or 2, **characterized in that**
the recursive algorithmic framework (FRW$_{alg}$) is a recursive interval and/or delay computation and acceptance algorithm, which in pseudocode is:

Given:

- The set of streams "S" with node intervals and computed delays.
- The new stream "*s*".
- The phase "p$_0$" where stream "*s*" is sent.

Output: The new stream "*s*" will be rejected in phase "p$_0$" if its acceptance doesn't allow the guarantee of all necessary constraints for a stream union set "S"U"*s*" because the rejection condition is violated. Otherwise, new intervals for the stream union set "S"U"*s*".
Main algorithm:
INIT("*s*", "S")
RECOMPUTE("*s*", "p$_0$", "S")
Function Definitions:

INIT (s, S)
Compute earliest and latest arrival time of the new stream "s" at each node "v" along the path of the new stream "s" with the original node intervals for the set of streams "S"
RECOMPUTE(*"s"*, "p", "S") //*outer recomputation framework*// F("*s*", "p", "S")
While latest arrival time of the new stream "*s*" is not in cycle with the phase "p". F("*s*", "p", "S")
Update table to the reduction rate RR("*s*") of the stream "*s*"
F("*s*", "p" "S")
successful = false
While !successful

recomputed = false
For each node "v" along the path of the new stream "*s*" where the new stream "*s*" could be in the phase "p" from start to finish!

(**A**) If there is already an account for the new stream "*s*" at the node "v" in the phase "p" CONTINUE to next node "v"
(**B**) If the rejection condition is violated for the new stream "*s*" at the node "v"→REJECT
if an adding of the new stream "*s*" leads to a buffer overflow at the node "v" in the phase "p" →REJECT

For each stream "s'" in the set of streams "S" whose delay is influenced by adding the new stream "s" at the node "v" in the phase "p"

Update intervals of the stream "s'" from the new delay for the new stream "s".

If that changes any node interval

(C) Recompute ("s‴", "p" mod RR("s‴"), "S"\"s‴") //*i.e., update delay*//

If any stream "s'" in the set of streams "S" increased any interval

recomputed = true

If recomputed

(D) adapt delay of the new stream "s" to changes at the node "v" in phases "p'" smaller than the phase "p" i.e., "p'"<"p"

If last node along the path of the new stream "s" reached → successful = true → STOP.

4. Computer-implemented method according to claim 3, **characterized in that**
the recursive interval and/or delay computation and acceptance algorithm includes a limited recursion depth, which is defined by a number of times the function F("s", "p", "S") is called from itself before having finished for performance reasons and accordingly reject the new stream "s" for which a deeper recursion would be required.

5. Computer-implemented tool (CIT) for tracking multicyclic traffic of Time Sensitive Networking (TSN)"-networks with synchronized end-stations, in particular designed as a Computer-Program-Product (CPP), e.g., an APP, with

- a non-transitory, processor-readable storage medium (STM) having processor-readable program-instructions of a program module (PGM) stored in the non-transitory, processor-readable storage medium (STM) and
- a processor (PRC) connected with the storage medium (STM) executing the processor-readable program-instructions of the program module (PGM),

**characterized in that**:
the processor (PRC) executes the processor-readable program-instructions of the program module (PGM) to carry out a computer-implemented method (SWA) according to one of the claims 1 to 4.

6. Control system for tracking multicyclic traffic of Time Sensitive Networking (TSN)"-networks with synchronized end-stations, with a computer,
**characterized by**:
a computer-implemented-tool (CIT, CPP, APP) for tracking the multicyclic traffic of the Time Sensitive Networking (TSN)"-network according to claim 5 which is uploadable into the computer to carry out a computer-implemented method (SWA) according to one of the claims 1 to 4.

---Pictures related to the specification---

PICTURE 1

[0,0]　[0,0]　[0,1] [0,1] [1,2]

PICTURE 2

PICTURE 3:

PICTURE 4:

Red marking

CIT, (CPP, APP)

Storage Medium   e.g. Random Access Memory — STM

PRC

Processor

Program Module — PGM

Software-Approach — SWA

Delay Computation Model — DCM

Algorithmic Framework — FRW$_{alg}$

Europäisches
Patentamt

European
Patent Office

Office européen
des brevets

## EUROPEAN SEARCH REPORT

Application Number

EP 22 16 7407

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/104062 A1 (AIJAZ ADNAN [GB]) 31 March 2022 (2022-03-31) * paragraph [0106] – paragraph [0133] * ----- | 1-6 | INV. H04L47/28 H04W28/02 |
| A | WO 2021/083510 A1 (SIEMENS AG [DE]) 6 May 2021 (2021-05-06) * page 54, line 10 – page 55, line 32 * ----- | 1-6 | |

TECHNICAL FIELDS
SEARCHED        (IPC)

H04L
H04W

The present search report has been drawn up for all claims

| Place of search | Date of completion of the search | Examiner |
|---|---|---|
| The Hague | 29 September 2022 | Ciurel, Cristian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 7407

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2022

| Patent document cited in search report | Publication date | Patent family member(s) | Publication date |
|---|---|---|---|
| US 2022104062 A1 | 31-03-2022 | NONE | |
| WO 2021083510 A1 | 06-05-2021 | CN 114830609 A | 29-07-2022 |
| | | EP 4014448 A1 | 22-06-2022 |
| | | WO 2021083510 A1 | 06-05-2021 |

For more details about this annex : see Official Journal of the European Patent Office, No. 12/82

**EP 4 258 617 A1**

**Patent documents cited in the description**

- WO 2019083508 A1
- WO 2019083509 A1
- WO 2019083510 A1